# EUROPÄISCHE PATENTSCHRIFT

(11) **EP 0 867 572 B1**
(45) Veröffentlichungstag und Bekanntmachung des Hinweises auf die Patenterteilung: **20.09.2006**
(21) Anmeldenummer: 98100961.6
(22) Anmeldetag: 21.01.1998
(51) Int. Cl.: E04B 1/78, F16L 59/02

(54) **Mineralwolleprodukt**
Mineral wool product
Produit en laine minérale

(30) Priorität: 29.03.1997 DE 29705691 U; 27.03.1997 DE 29705514 U
(43) Veröffentlichungstag der Anmeldung: 30.09.1998
(73) Patentinhaber: Deutsche Rockwool Mineralwoll GmbH & Co. OHG, 45966 Gladbeck (DE)
(72) Erfinder: Krösche, Jens Peter, 18057 Rostock (DE); Schwank, Martin, 46242 Bottrop (DE)
(74) Vertreter: Wanischeck-Bergmann, Axel

(56) Entgegenhaltungen:
- EP-A- 0 101 376
- EP-A- 0 795 659
- DE-A- 4 323 717
- DE-U- 8 519 811
- US-A- 3 835 604

## Beschreibung

Die Erfindung betrifft ein Mineralwolleprodukt, insbesondere Mineralwollematte, - platte, -formelement oder dergleichen, bestehend aus einem, eine Hauptfläche aufweisenden Mineralwollevlies und zumindest einer Kaschierung in Form einer Folie aus Kunststoff, Metall, einem Glasvlies, sonstigem Papier, Verbundfolien aus gleichen oder verschiedenen Materialien oder dergleichen, die auf der Hauptfläche aufgebracht ist und die eine Markierung aufweist, die aus Zeichen in Form von Zahlen, Buchstaben oder Piktogrammen ausgebildet ist, die einen Sinn enthalten.

Aus dem Stand der Technik sind derartige Mineralwolleprodukte bekannt. Sie werden zur Wärme- und/oder Schalldämmung bei Gebäuden verwendet. Insbesondere finden derartige Mineralwolleprodukte Verwendung bei der Fassaden- und/oder Dachdämmung. Es sind aber auch weitere Einsatzgebiete derartiger Mineralwolleprodukte bekannt. Beispielsweise werden derartige Mineralwolleprodukte für die Wärmedämmung von Rohrleitungen verwendet.

Aus der DE-C- 36 12 858 ist eine in Rollenform vorliegende Mineralfaserbahn bekannt, die in Längenabschnitte abgeschnitten wird, deren Länge der Breite eines Sparrenfeldes zwischen Dachsparren zuzüglich eines Übermaßes für die Klemmwirkung entspricht. Hierzu weist die Mineralfaserbahn auf einer Seite Markierungslinien auf, die bei der Fertigung einer derartigen Mineralfaserbahn durch eine mitlaufende Walze mit linienfömigen Heizzonen erzeugt werden können. Derartige Mineralfaserprodukte haben allerdings den Nachteil, dass das Einbringen der Markierungslinien, die darüber hinaus quer zur Längserstreckung verlaufen, nur mittels thermischer Einwirkung auf die Mineralfasern erfolgen kann. Hierbei ist es nachteilig, dass diese vorbekannte Mineralfaserbahn nicht mit einer einseitig angeordneten Kaschierung abgedeckt ist. Die Kaschierung kann hierbei auch nur auf die Fläche aufgebracht werden, die keine Markierungslinien aufweist.

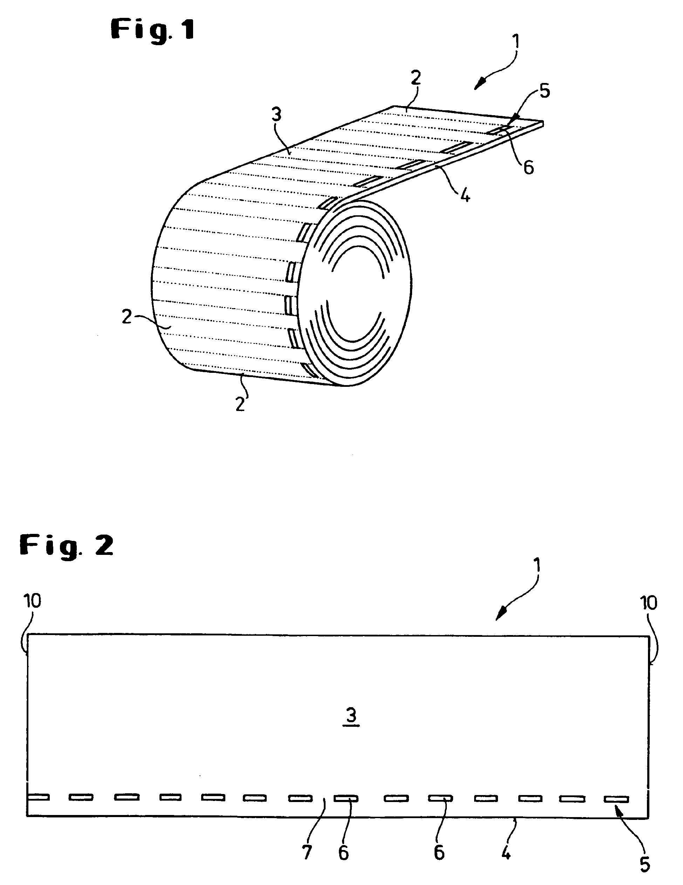

Aus der US-A-3 835 604 ist bereits ein Mineralwolleprodukt bekannt, welches als Mineralwollevlies ausgebildet ist und eine Hauptoberfläche aufweist, auf der eine Kaschierurig aufgebracht ist. Die Kaschierung weist eine gegenüber der Breite des Mineralwollevlieses beidseitig vergrößerte Breite auf, wobei die Kaschierung im Bereich ihrer über die Längskante hervorstehenden Abschnitte zumindest zweifach gefaltet und auf die Hauptfläche des Mineralvlieses abgelegt ist (Figur 1 a).

Derartige Mineralwolleprodukte sind seit langem aus dem Stand der Technik bekannt und werden als Randleistenfilze bezeichnet, die sich insbesondere für den Einbau zwischen beabstandet angeordneten Dachsparren eignen, wobei die über die Längskantenbereiche des Mineralwollevlieses hervorstehenden Abschnitte der Kaschierung zur Befestigung an Flächen der Dachsparren vorgesehen sind.

Ergänzend ist aus diesem Stand der Technik zu entnehmen, dass die Kaschierung eine Markierung aufweist, die im Bereich der Hauptfläche des Mineralwollevlieses aus rechtwinklig zueinander ausgerichteten Linien ausgebildet ist, welche Linien parallel zur Längserstreckung des Mineralwollevlieses und rechtwinklig hierzu verlaufend angeordnet sind. Im Bereich der seitlich über das Mineralwollevlies hinausragenden Bereiche, den sogenannten Randbereichen der Kaschierung weist die Kaschierung ergänzend Zeichen in Form von Zahlen, Buchstaben oder Piktogrammen auf.

Ausgehend von diesem Stand der Technik liegt der Erfindung die **Aufgabe** zugrunde ein Mineralwolleprodukt zu schaffen, das hinsichtlich seiner Verarbeitbarkeit, nämlich seiner Identifizierbarkeit und seiner an Arbeitsstellengegebenheiten anzupassenden Zuschneidbarkeit vereinfacht und damit kostengünstig herstellbar ausgebildet ist.

Die **Lösung** dieser Aufgabenstellung sieht vor, dass die Zeichen der Markierung im Bereich einer Längskante der Hauptfläche des Mineralwollevlieses auf oder in der Kaschierung angeordnet sind, dass die Zeichen der Markierung eine Höhe aufweisen und zur Längskante der Hauptfläche des Mineralwollevlieses ausgerichtet sind, dass die Höhe der Zeichen der Markierung einen Abstand bestimmen und dass die Markierung strichförmige Linien aufweist, die zwischen den Zeichen angeordnet und parallel zur Längserstreckung des Mineralwollevlieses ausgerichtet sind.

Ein derart ausgebildetes Mineralwolleprodukt, das insbesondere die Form einer Mineralfaserbahn gemäß DIN 18165-1 hat, weist somit eine einseitig angeordnete Kaschierung auf, die zumindest eine Markierung aufweist. Diese Ausgestaltung erleichtert das Zuschneiden der Mineralfaserbahn, ohne dass geeignete Messwerkzeuge notwendig sind. Insbesondere bei der Anfertigung, d.h. Ablängung von Mineralfaserbahnen für die Isolierung von Rohrleitungen ergeben sich hieraus Vorteile hinsichtlich der Verarbeitungsgeschwindigkeit. Unter dem Mineralwolleprodukt sind aber auch Dämmfilze und Dämmmatten zu verstehen.

Vorzugsweise ist die Markierung als Skalierung ausgebildet und besteht insbesondere aus einer Vielzahl von in gleichmäßigen Abständen angeordneten Linien. Diese Skalierungen können an einer oder beiden Längskanten der Mineralwollematten angeordnet sein. Bei breiten Mineralwollematten können die Skalierungen auch nahe der Mittellinie, sowie an den Längs- oder Stirnkanten angebracht sein. Die Skalierungen können farbig aufgedruckt oder in die Oberfläche von Metall-, Kunststofffolien, Papier, Vliesen oder Verbundfolien geprägt sein. Es besteht ferner die Möglichkeit, die Skalierungen bzw. die Markierungen aufzukleben.

Nach einem weiteren Merkmal der Erfindung ist vorgesehen, dass die Markierung aus Zahlen, Buchstaben, Piktogrammen oder dergleichen sinnenthaltenden Zeichen besteht, deren rechtwinklig zur Kante der Kaschierung angeordnete Höhe den Abstand bestimmt. Diese Ausgestaltung hat den Vorteil, daß über die Markierung nicht nur eine Bemaßung angegeben wird, sondern daß die Markierung darüber hinaus auch weitere Eigenschaften des Mineralwolleproduktes angibt. Beispielsweise können das herstellende Unternehmen, die Art der Mineralwolleplatte, -matte oder dergleichen angegeben sein. Zwischen den Zahlen, Buchstaben, Pictogrammen oder dergleichen sinnenthaltenden Zeichen können strichförmige Linien angeordnet sein, die in Kombination mit den voranstehend genannten sinnenthaltenden Zeichen die Markierungen darstellen und beispielsweise die Skalierung ergeben, wohingegen die Buchstaben, Zahlen, Pictogramme oder dergleichen Hinweise für die verarbeitenden Personen haben.

Es ist nach einem weiteren Merkmal der Erfindung vorgesehen, daß die Breite des Abstandes zwischen der Längskante und der Markierung mit der halben Breite eines abdeckenden Klebebandes übereinstimmt. Bei stoßweise aneinanderliegenden Abschnitten des Mineralwolleproduktes können somit über ein Klebeband die nach außen hin sichtbaren Skalierungen abgedeckt werden. Insbesondere bei mit diesen Mineralwolleprodukten isolierten Rohrleitungen ergibt sich dann eine gleichmäßige Oberfläche der Isolierung, ohne daß die für die Verarbeitung der Isolierung bzw. der Mineralwolleprodukte vorteilhafte Markierung nach Beendigung der Arbeit noch erkennbar ist.

Das Klebeband besteht hierbei insbesondere aus dem Material der Kaschierung, so daß auch hinsichtlich des Materials der Kaschierung eine einheitliche Oberfläche erzielbar ist.

Nach einem weiteren Merkmal der Erfindung ist vorgesehen, daß die Markierung an zwei parallel zueinander verlaufenden Längskanten angeordnet ist. Somit kann das Mineralwolleprodukt an seinen beiden Längskanten gleich bearbeitet werden, bzw. die gegenüberliegenden Markierungen miteinander verbunden werden, um einen geraden Schnitt rechtwinklig zu den Längskanten des Mineralwolleproduktes durchzuführen. Hierdurch kann das Ablängen des Mineralwolleproduktes, beispielsweise zur Befestigung an einer Rohrleitung mit bestimmtem Durchmesser und damit mit bestimmtem Umfang vereinfacht werden. Die Ummantelung der Rohrleitung kann somit paßgenau von einer Mineralfaserbahn abgeschnitten werden, bevor die Ummantelung dann an der Rohrleitung befestigt wird, indem man die aufeinanderstoßenden in Längsachsenrichtung verlaufenden Enden der Mineralfaserbahn mit einem Klebestreifen miteinander verbindet.

Es hat sich als vorteilhaft erwiesen, die Kaschierung aus einer Aluminiumverbundfolie auszubilden. Eine derartige Aluminiumverbundfolie weist eine hohe Zugfestigkeit und darüber hinaus ergänzende Wärmedämmeigenschaften auf.

Darüber hinaus ist es vorteilhaft, daß die Abstände zwischen einzelnen Markierungen mit der Länge der Markierungen übereinstimmen. Vorzugsweise beträgt der Abstand zwischen der Längskante und der Markierung 10 bis 30 mm, vorzugsweise 20 bis 25 mm, insbesondere 20 mm. Die Markierungen bestehen aus Balken, die jeweils eine Fläche von 2,5 bis 8 mm, vorzugsweise 5 bis 6 mm mal 30 bis 70 mm, vorzugsweise 50 mm bedecken. Diese Bemaßungen haben sich insoweit als vorteilhaft erwiesen, daß die Markierungen nur eine Fläche bedecken, die notwendig ist, um eine gute Erkennbarkeit der Markierungen zu gewährleisten. Schließlich können die Markierungen auf der Kaschierung aufgebracht oder auch aus der Kaschierung ausgestanzt sein. Die Markierungen können beispielsweise farbig aufgedruckt oder in die Oberfläche von Metall-, Kunststoffolien, Papier, Vliesen oder Verbundfolien geprägt sein. Außer Rechtecken kommen für die Markierungen auch andere geometrische Figuren, wie Striche, Punkte, Kreise, Dreiecke oder dergleichen in Frage. Vorzugsweise werden derartige Markierungen bei Rohrschalen mit Längen zwischen 0,5 und 2 m, bei Platten zwischen 0,5 und 2,5 m Länge und Breite, sowie bei Matten und Lamellenmatten von 0,5 bis 2,5 m Breite und 1,5 bis 20 m Länge angeordnet.

Weitere Merkmale und Vorteile der Erfindung ergeben sich aus der nachfolgenden Beschreibung einer bevorzugten Ausführungsform des erfindungsgemäßen Mineralwolleproduktes. In der Zeichnung zeigen:
- Figur 1: eine ausgerollte Mineralwollematte mit entlang einer Längskante aufgebrachter Markierung;
- Figur 2: einen Abschnitt der Mineralwollematte gemäß Figur 1;
- Figur 3: verschiedene Markierungsformen im Bereich der Längskante der Mineralwollematte gemäß Figur 2 und
- Figur 4: eine mit der Mineralwollematte gemäß Figur 2 isolierte Rohrleitung:

In der Figur 1 ist eine Lamellenmatte 1 in aufgerollter Position dargestellt. Die Lamellenmatte 1 besteht aus einer Vielzahl von Lamellen 2, die rechtwinklig zur Längserstreckung der Lamellenmatte 1 verlaufend angeordnet und miteinander verbunden sind. Auf der Außenfläche der Lamellenmatte 1 ist eine Kaschierung 3 dargestellt, die aus einer Aluminiumverbundfolie besteht. Die Kaschierung 3 ist mit den einzelnen Lamellen 2 verbunden.

Entlang einer Längskante 4 der Lamellenmatte 1 ist eine Markierung 5 auf der Kaschierung 3 aufgebracht. Die Markierung 5 besteht aus einer Skalierung, die eine Vielzahl von Strichbalken 6 aufweist. Die Strichbalken 6 haben eine Länge, die mit dem Abstand zwischen den Strichbalken 6 übereinstimmt. Die Strichbalken 6 sind darüber hinaus parallel zur Längskante 4 der Lamellenmatte 1 ausgerichtet.

In der Figur 2 ist ein Abschnitt der Lamellenmatte 1 gemäß der Figur 1 dargestellt. Hierbei ist zu erkennen, daß die Strichbalken 6 in unmittelbarer Nähe der Längskante 4 angeordnet sind. Die Strichbalken 6 haben einen Abstand von 20 mm von der Längskante 4 der Lamellenmatte 1. Darüber hinaus ist jeder Strichbalken 6 50 mm lang und 5 mm breit. Dementsprechend sind auch die Zwischenräume 7 zwischen den Strichbalken 6 50 mm lang, so daß die Markierung 5 die üblichen Skalierungseigenschaften aufweist.

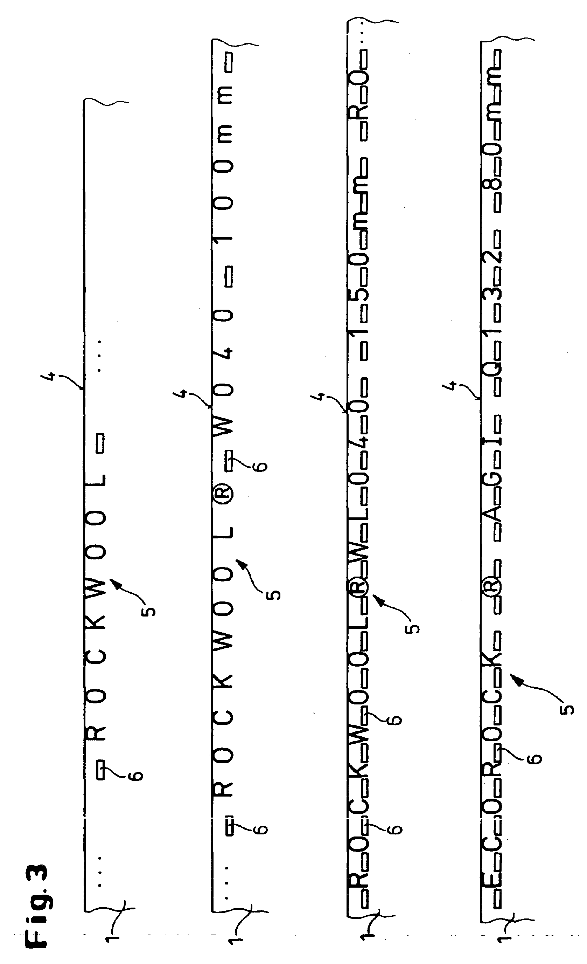

In der Figur 3 sind vier Beispiele möglicher Markierungen 5 dargestellt. Es ist zu erkennen, daß die Markierungen 5 auch aus Buchstaben und / oder Zahlen sowie aus Pictogrammen bestehen kann. Hierbei können die Buchstaben und / oder Zahlen sowie Pictogramme jeweils von einem Strichbalken 6 voneinander getrennt sein. Es ist aber auch möglich, daß die Strichbalken 6 derart angeordnet sind, daß die Buchstaben und / oder Zahlen von diesen Strichbalken 6 nicht unterbrochen werden. Weiterhin besteht die Möglichkeit, daß neben den Buchstaben und / oder Zahlen und / oder Pictogrammen keine weiteren Strichbalken vorgesehen sind. Hierbei können beispielsweise auch die Buchstaben und / oder Zahlen die mögliche Skalierung darstellen, wenn die Buchstaben und / oder Zahlen oder dergleichen entsprechend größengleich ausgebildet sind, so daß sowohl ihre Erstreckung rechtwinklig zur Längskante 4 der Lamellenmatte 1 als auch ihre Breite parallel zur Längskante 4 der Lamellenmatte 1 gleichmäßig ausgebildet ist.

Die Markierungen 5 können sowohl auf die Kaschierung 3 aufgedruckt oder in die Kaschierung 3 eingeprägt bzw. eingestanzt sein.

Durch die Markierungen 5 auf der Kaschierung 3 der Lamellenmatte 1 wird eine Zuschnittshilfe zur leichteren Orientierung bei Ablängung der Lamellenmatte 1 vorgesehen. Durch die Anordnung der Markierung 5 auf der Kaschierung 3 kann im wesentlichen auf Meßwerkzeuge oder dergleichen verzichtet werden, da die Markierung 5 eine entsprechende Ablängung aufgrund ihrer Skalierungseigenschaften erleichtert. Selbstverständlich ist es auch möglich, daß die Markierungen 5 nicht nur an einer Längskante 4 der Lamellenmatte 1, sondern an beiden Längskanten 4 der Lamellenmatte 1 angeordnet sind. Weiterhin besteht die Möglichkeit, daß bei breiten Lamellenmatten 1 mehr als zwei Markierungen 5, beispielsweise eine ergänzende Markierung in der Mitte der Lamellenmatte 1 vorgesehen ist.

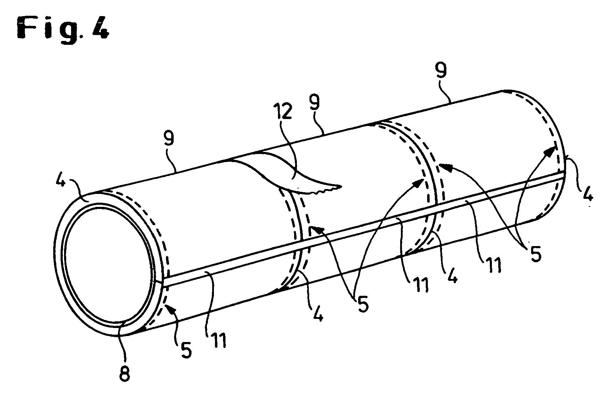

In der Figur 4 ist die Anwendung der in Figur 2 dargestellten Abschnitte der Lamellenmatte 1 dargestellt. Figur 4 zeigt zu diesem Zweck eine Rohrleitung 8, die an ihrer Außenseite mit Lamellenmattenabschnitten 9 umhüllt ist. Hierbei sind die Markierungen 5 auf den Lamellenmattenabschnitten 9 zu erkennen. Diese Markierungen 5 verlaufen parallel zu den Längskanten 4 in Umfangsrichtung der Rohrleitung 8.

Jeder Lamellenmattenabschnitt 9 ist derart auf der Rohrleitung 8 angeordnet, daß die Stirnkanten 10 (vgl. Figur 2) des Lamellenmattenabschnitts 9 bündig aneinanderanstoßen. Die Stirnkanten 10 sind dann mit einem Klebestreifen 11 überdeckt und miteinander verbunden.

Ein weiterer Klebestreifen 12 ist derart zwischen zwei benachbarten Lamellenmattenabschnitten 9 angeordnet, daß er die in Längsachsenrichtung der Rohrleitung 8 benachbarten Lamellenmattenabschnitte 9 miteinander verbindet und die Markierungen 5 benachbarter Lamellenmattenabschnitte 9 derart überdeckt, daß sich insgesamt eine einheitliche Oberfläche ohne Markierungen 5 ergibt. Der Klebestreifen 12 besteht ebenfalls aus einer Aluminiumverbundfolie, so daß eine insgesamt gleichmäßige Fläche auf der Rohrleitung 8 erzielbar ist. Die Breite des Klebestreifens 12 entspricht damit dem doppelten Abstand zwischen der Längskante 4 und der Markierung 5 zuzüglich der Breite des Strichbalkens 6. Vorzugsweise werden hierzu Klebestreifen 12 verwendet, deren Breite 50 bis 100 mm beträgt.

Anstelle der beschriebenen Lamellenmatte können auch andere Mineralwolleprodukte erfindungsgemäß ausgebildet sein. Beispielsweise ist die erfindungsgemäße Ausbildung auch bei solchen Mineralwollematten möglich, bei der die Fasern überwiegend rechtwinklig an der kaschierten Oberfläche angeordnet sind. Diese Faseranordnung ermöglicht eine hohe seitliche Kompressibilität. Die Anwendung der Erfindung bei Dämmfilzen ist ebenfalls möglich.

## Patentansprüche

1. Mineralwolleprodukt, insbesondere Mineralwollematte, -platte, -formelement oder dergleichen, bestehend aus einem, eine Hauptfläche aufweisenden Mineralwollevlies und zumindest einer Kaschierung in Form einer Folie aus Kunststoff, Metall, einem Glasvlies, sonstigem Papier, Verbundfolien aus gleichen oder verschiedenen Materialien oder dergleichen, die auf der Hauptfläche aufgebracht ist und die eine Markierung aufweist, die aus Zeichen in Form von Zahlen, Buchstaben oder Pictogrammen ausgebildet ist, die einen Sinn enthalten,
**dadurch gekennzeichnet,**
**dass** die Zeichen der Markierung (5) im Bereich einer Längskante (4) der Hauptfläche des Mineralwollevlieses auf oder in der Kaschierung (3) angeordnet sind, dass die Zeichen der Markierung (5) eine Höhe aufweisen und zur Längskante (4) der Hauptfläche des Mineralwollevlieses ausgerichtet sind, dass die Höhe der Zeichen der Markierung (5) einen Abstand bestimmen und dass die Markierung (5) strichförmige Linien (6) aufweist, die zwischen den Zeichen angeordnet und parallel zur Längserstreckung des Mineralwollevlieses ausgerichtet sind.

2. Mineralwolleprodukt nach Anspruch 1,
**dadurch gekennzeichnet,**
**dass** die Kaschierung (3) auf mehreren miteinander verbundenen Mineralwollelamellen (2) aufgebracht ist.

3. Mineralwolleprodukt nach Anspruch 1,
**dadurch gekennzeichnet,**
**dass** die Markierung (5) eine Skalierung aufweist, die aus einer Vielzahl von in gleichmäßigen Abständen angeordneten Linien (6) besteht.

4. Mineralwolleprodukt nach Anspruch 1,
**dadurch gekennzeichnet,**
**dass** die Breite des Abstandes zwischen der Längskante (4) und der Markierung (5) mit der halben Breite eines abdeckenden Klebebandes (12) übereinstimmt.

5. Mineralwolleprodukt nach Anspruch 4,
**dadurch gekennzeichnet,**
**dass** das Klebeband (12) aus dem Material der Kaschierung (3) besteht.

6. Mineralwolleprodukt nach Anspruch 1,
**dadurch gekennzeichnet,**
**dass** die Markierung (5) an zwei parallel zueinander verlaufenden Längskanten (4) angeordnet ist.

7. Mineralwolleprodukt nach Anspruch 1,
**dadurch gekennzeichnet,**
**dass** die Kaschierung (3) aus einer Aluminiumverbundfolie besteht.

8. Mineralwolleprodukt nach Anspruch 1,
**dadurch gekennzeichnet,**
**dass** die Abstände zwischen einzelnen Markierungen (5) mit der Länge der Markierungen (5) übereinstimmen.

9. Mineralwolleprodukt nach Anspruch 1,
**dadurch gekennzeichnet,**
**dass** der Abstand zwischen der Längskante (4) und der Markierung (5) 10 bis 30 mm, vorzugsweise 20 bis 25 mm, insbesondere 20 mm beträgt.

10. Mineralwolleprodukt nach Anspruch 1,
**dadurch gekennzeichnet,**
**dass** die Markierung (5) Balken aufweist, die jeweils eine Fläche von 2,5 bis 8 mm, vorzugsweise 5 bis 6 mm mal 30 bis 70 mm, vorzugsweise 50 mm bedecken.

11. Mineralwolleprodukt nach Anspruch 1,
**dadurch gekennzeichnet,**
**dass** die Markierung (5) auf der Kaschierung (3) aufgedruckt ist.

12. Mineralwolleprodukt nach Anspruch 1,
**dadurch gekennzeichnet,**
**dass** die Markierung (5) aus der Kaschierung (3) ausgestanzt oder dass die Markierung (5) in die Kaschierung (3) eingeprägt ist.

13. Mineralwolleprodukt nach Anspruch 1,
**gekennzeichnet**
**durch** überwiegend rechtwinklig zur Kaschierung (3) ausgerichtete Mineralfasem.

## Claims

1. Mineral wool product, in particular mineral wool mat, panel, preformed element or the like, consisting of a mineral wool nonwoven including a major surface and of at least one sheet lining in the form of a foil from synthetic material, metal, a glass fibre mat, other paper, composite foils from same or different materials or the like which is applied to the major surface and which includes a marking which is composed of characters in the form of numbers, letters or pictographs that make sense,
**characterized in that**
said characters of the marking (5) are provided on or in said sheet lining (3) in the region of a longitudinal edge (4) of the major surface of the mineral wool nonwoven, that said characters of the marking (5) have a height and are aligned to the longitudinal edge (4) of the major surface of the mineral wool web, that the height of the characters of the marking (5) determines a distance and that the marking (5) includes stroke-like lines (6) which are arranged between the characters and are aligned parallel to the longitudinal extension of the mineral wool web.

2. Mineral wool product according to claim 1,
**characterized in that**
the sheet lining (3) is applied to several interconnected mineral wool plates (2).

3. Mineral wool product according to claim 1,
**characterized in that**
the marking (5) includes a scaling which consists of a plurality of equally spaced lines (6).

4. Mineral wool product according to claim 1,
**characterized in that**
the width of the distance between the longitudinal edge (4) and the marking (5) corresponds to half the width of a covering adhesive tape (12).

5. Mineral wool product according to claim 4,
**characterized in that**
the adhesive tape (12) consists of the material of the sheet lining (3).

6. Mineral wool product according to claim 1,
**characterized in that**
the marking (5) is arranged on two mutually parallel extending longitudinal edges (4).

7. Mineral wool product according to claim 1,
**characterized in that**
the sheet lining (3) consists of an aluminium composite foil.

8. Mineral wool product according to claim 1,
**characterized in that**
the spacings between the individual markings (5) correspond to the length of the markings (5).

9. Mineral wool product according to claim 1,
**characterized in that**
the spacing between the longitudinal edge (4) and the marking (5) is about 10 to 30 mm, preferably 20 to 25 mm and particularly 20 mm.

10. Mineral wool product according to claim 1,
**characterized in that**
the marking (5) includes bars, each of which covering an area of about 2.5 to 8 mm, preferably 5 to 6 mm times 30 to 70 mm, preferably 50 mm.

11. Mineral wool product according to claim 1,
**characterized in that**
the marking (5) is printed on the sheet lining (3).

12. Mineral wool product according to claim 1,
**characterized in that**
the marking (5) is punched out of the sheet lining (3) or that the marking is engraved in the sheet lining (3).

13. Mineral wool product according to claim 1,
**characterized by**
mineral fibres which are predominantly aligned at right angles to the sheet lining (3).

## Revendications

1. Produit en laine minérale, en particulier natte en laine minérale, panneau en laine minérale, élément moulé en laine minérale ou équivalent, constitué par un non-tissé en laine minérale qui présente une surface princiaple et par au moins un contrecollage en forme de feuille en matière synthétique, en métal, en mat de fibres de verre, en papier annexe, en feuilles composites constituées par les mêmes matériaux ou des matériaux différents ou équivalent, contrecollage qui est appliqué sur la surface principale et qui présente une marque qui est configurée par des signes en forme de nombres, lettres ou pictogrammes qui contiennent un sens,
**caractérisé en ce**
**que** les signes de la marque (5) sont placés dans la zone d'une arête longitudinale (4) de la surface principale du non-tissé en laine minérale ou dans le contrecollage (3), que les signes de la marque (5) présentent une hauteur et sont alignés avec l'arête longitudinale (4) de la surface principale du non-tissé en laine minérale, que la hauteur des signes de la marque (5) définissent une distance et que la marque (5) présente des lignes en forme de traits (6) qui sont placées entre les signes et qui sont orientées parallèlement par rapport à l'extension en longueur du non-tissé en laine minérale.

2. Produit en laine minérale selon la revendication 1,
**caractérisé en ce**
**que** le contrecollage (3) est appliqué sur plusieurs lamelles de laine minérale (2) reliées les unes aux autres.

3. Produit en laine minérale selon la revendication 1,
**caractérisé en ce**
**que** la marque (5) présente une échelle qui est constituée par une multitude de lignes (6) placées à des écarts constants.

4. Produit en laine minérale selon la revendication 1,
**caractérisé en ce**
**que** la largeur de l'écart entre l'arête longitudinale (4) et la marque (5) coïncide avec la demie largeur d'une bande adhésive recouvrante (12).

5. Produit en laine minérale selon la revendication 4,
**caractérisé en ce**
**que** la bande adhésive (12) est constituée par le matériau du contrecollage (3).

6. Produit en laine minérale selon la revendication 1,
**caractérisé en ce**
**que** la marque (5) est placée sur deux arêtes longitudinales (4) parallèles l'une à l'autre.

7. Produit en laine minérale selon la revendication 1,
**caractérisé en ce**
**que** le contrecollage (3) est constitué par une feuille composite en aluminium.

8. Produit en laine minérale selon la revendication 1,
**caractérisé en ce**
**que** les écarts entre les différentes marques (5) coïncident avec la longueur des marques (5).

9. Produit en laine minérale selon la revendication 1,
**caractérisé en ce**
**que** l'écart entre l'arête longitudinale (4) et la marque (5) est de 10 à 30 mm, de préférence de 20 à 25 mm, en particulier de 20 mm.

10. Produit en laine minérale selon la revendication 1,
**caractérisé en ce**
**que** la marque (5) présente des barres qui recouvrent respectivement une surface de 2,5 à 8 mm, de préférence de 5 à 6 mm fois 30 à 70 mm, de préférence de 50 mm.

11. Produit en laine minérale selon la revendication 1,
**caractérisé en ce**
**que** la marque (5) est imprimée sur le contrecollage (3).

12. Produit en laine minérale selon la revendication 1,
**caractérisé en ce**
**que** la marque (5) est découpée dans le contrecollage (3) ou que la marque (5) est gaufrée dans le contrecollage (3).

13. Produit en laine minérale selon la revendication 1,
**caractérisé**
**par** des fibres minérales orientées principalement à angle droit par rapport au contrecollage (3).
